(19) Europäisches Patentamt
European Patent Office
Office européen des brevets

(11) EP 3 475 917 B1

(12) **EUROPEAN PATENT SPECIFICATION**

(45) Date of publication and mention of the grant of the patent:
**26.01.2022 Bulletin 2022/04**

(21) Application number: **17733432.3**

(22) Date of filing: **26.06.2017**

(51) International Patent Classification (IPC):
***G06T 7/579*** *(2017.01)*

(52) Cooperative Patent Classification (CPC):
**G06T 7/579;** G06T 2207/20072; G06T 2207/20076; G06T 2207/30241; G06T 2207/30244

(86) International application number:
**PCT/EP2017/065677**

(87) International publication number:
**WO 2017/220815 (28.12.2017 Gazette 2017/52)**

(54) **RGB-D CAMERA BASED SLAM SYSTEM AND METHOD THEREOF**

RGB-D-KAMERABASIERTES SLAM-SYSTEM UND VERFAHREN DAFÜR

SYSTÈME DE SLAM BASÉ SUR UNE CAMÉRA RGB-D ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2016 US 201662354251 P**

(43) Date of publication of application:
**01.05.2019 Bulletin 2019/18**

(73) Proprietor: **Robert Bosch GmbH**
**70442 Stuttgart (DE)**

(72) Inventors:
- **KIM, Soohwan**
  **Sunnyvale, California 94087 (US)**
- **BABU, Benzun Pious Wisely**
  **San Jose, CA 95134-2248 (US)**
- **YAN, Zhixin**
  **Worcester, Massachusetts 01609 (US)**
- **REN, Liu**
  **Cupertino, California 95014 (US)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**US-A1- 2012 306 847**

- **BABU BENZUN WISELY ET AL: "[sigma]-DVO: Sensor Noise Model Meets Dense Visual Odometry", 2016 IEEE INTERNATIONAL SYMPOSIUM ON MIXED AND AUGMENTED REALITY (ISMAR), IEEE, 19 September 2016 (2016-09-19), pages 18-26, XP033023403, DOI: 10.1109/ISMAR.2016.11**
- **KERL CHRISTIAN ET AL: "Dense visual SLAM for RGB-D cameras", 2013 IEEE/RSJ INTERNATIONAL CONFERENCE ON INTELLIGENT ROBOTS AND SYSTEMS, IEEE, 3 November 2013 (2013-11-03), pages 2100-2106, XP032537192, ISSN: 2153-0858, DOI: 10.1109/IROS.2013.6696650 [retrieved on 2013-12-26]**
- **KERL CHRISTIAN ET AL: "Robust odometry estimation for RGB-D cameras", 2013 IEEE INTERNATIONAL CONFERENCE ON ROBOTICS AND AUTOMATION (ICRA); 6-10 MAY 2013; KARLSRUHE, GERMANY, IEEE, US, 6 May 2013 (2013-05-06), pages 3748-3754, XP032506020, ISSN: 1050-4729, DOI: 10.1109/ICRA.2013.6631104 ISBN: 978-1-4673-5641-1 [retrieved on 2013-10-13]**
- **HAUKE STRASDAT ET AL: "Double window optimisation for constant time visual SLAM", COMPUTER VISION (ICCV), 2011 IEEE INTERNATIONAL CONFERENCE ON, IEEE, 6 November 2011 (2011-11-06), pages 2352-2359, XP032101470, DOI: 10.1109/ICCV.2011.6126517 ISBN: 978-1-4577-1101-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 475 917 B1

## Description

FIELD

This disclosure relates generally to SLAM systems and, more particularly, to a RGB-D camera based SLAM system and method thereof.

BACKGROUND

"Dense Visual SLAM for RGB-D Cameras", by Christian Kerl et al. discloses a dense visual SLAM method for RGB-D cameras that minimizes both the photometric and the depth error over all pixels. In contrast to sparse, feature-based methods, this method allows to better exploit the available information in the image data which leads to higher pose accuracy. Furthermore, an entropy-based similarity measure for keyframe selection and loop closure detection are proposed.

"Robust odometry estimation for RGB-D cameras", Christian Kerl et al. discloses providing a fast and accurate method to estimate the camera motion from RGB-D images. The approach registers two consecutive RGB-D frames directly upon each other by minimizing the photometric error. The camera motion is estimated using non-linear minimization in combination with a coarse-to-fine scheme. To allow for noise and outliers in the image data, the document proposes to use a robust error function that reduces the influence of large residuals. Furthermore, the disclosed formulation allows for the inclusion of a motion model which can be based on prior knowledge, temporal filtering, or additional sensors like an IMU.

SUMMARY

The invention provides a method for computing visual Simultaneous Localization and Mapping as well as a visual SLAM system as recited in the independent claims. Advantageous embodiments are set out in the dependent claims.

BRIEF DESCRIPTION OF THE DRAWINGS

These and other features, aspects, and advantages of this disclosure will become better understood when the following detailed description is read with reference to the accompanying drawings in which like characters represent like arts throughout the drawings, wherein:

FIG. 1 is a block diagram illustrating a visual SLAM system;
FIG. 2 is a block diagram illustrating the structure of an example keyframe graph and loop constraint evaluator;
FIG. 3 illustrates a RGB-D camera sensor model;
FIG. 4 is a block diagram of an uncertainty propagation; and
FIG. 5 illustrates an example of a map generated by a σ-DVO SLAM system

DETAILED DESCRIPTION

FIG. 1 is a block diagram illustrating a visual Simultaneous Localization and Mapping (SLAM) system 100 divided into frontend 100a and backend 100b. At the frontend 100a, the system 100 uses visual odometry approach by making full use of all pixel information from an RGB-D camera to generate a local transformation estimate 112. Which is to say, dense visual odometry 108 or 110 provides a pairwise transformation estimate between two image frames 102, 104, 106. As illustrated, pairwise transformation estimate is performed between keyframe 102 and current frame 104 using dense visual odometry 108. Second pairwise transformation estimate is performed between current frame 104 and previous frame 106 using dense visual odometry 110. A keyframe generator 114 is used to generate a keyframe $V_k$ based on the quality of the odometry estimate. At the backend 100b of the system 100, a keyframe graph $G \subset \{V_k\}$ 116 using the keyframe generator 114 is created. At a loop constraint evaluator 118, constraints based on the return, e.g. loop closure to previously visited locations are added to the keyframe graph to improve its connectivity. Graph optimizer 120 then optimizes the final graph with constraints to produce an optimized map with trajectory 122. More details on the keyframe graph 116 and the loop constraint evaluator 118 will be described below. A probabilistic sensor model is used in the front-end 100a and performs keyframe generation 114, and loop constraint detection 118 and graph optimization 120 in the back-end 100b.

FIG. 2 is a block diagram illustrating a structure of an example keyframe graph 200 comprises a backend graph optimization 202 and a local neighborhood 204. In the back-end graph optimization 202, the loop constraints $L_{Ki,Kj}$

combined with odometry constraints weighted by $I_{K_i,K_j}$ is optimized. Recent keyframe $K_1$ and the frames tracked with respect to $K_1$, ($f_1$, ..., $f_n$) are included in the local neighborhood 204. The keyframes $K_1$ and the tracked frames ($f_1$, ..., $f_n$) are determined based on the ratio of entropies $H_{K1,f1}/H_{K1,fn}$. When the current frame does not contain sufficient information to track a new frame, a new keyframe is generated by using entropy of a camera pose estimate. The camera pose estimate generates a new keyframe when the estimated entry between the keyframe and the current frame falls below a threshold normalized by the largest estimate entropy in the local neighborhood 204. The largest estimate entropy is assumed to be the one between the keyframe and the first frame. An additional key frame generation strategy based on the curve estimate of the camera trajectory is proposed. The curve estimate $\rho_{i,k}$ between Frames i and k is defined as the ratio of the sum of the translations between the frames ($\delta_{i,i-1}$) in the local neighborhood N with respect to the translation between the keyframe and the latest frame ($\delta_{i,k}$).

$$\rho = \frac{\Sigma_{i\in N}^{k}\delta_{i,i-1}}{\delta_{i,k}} \qquad \text{equation (1)}$$

The return to a previously visited location helps identify additional constraints to the graph called loop closure at the loop constraint evaluator 118 as illustrated in FIG. 2. After optimization, the pose graph is adjusted based on the edge weights of different constraints in the graph. An erroneous loop constraint sometime can lead to a poorly optimized final trajectory. Extending previous loop constraint generation methods, two additional techniques can be used to reduce the impact of wrong loop constraints. Firstly, the loop closure constraints are weighted based on the inverse square of the metric distance between the keyframes that form the loop closure. This is based on the intuition that loop constraint between far frames is prone to a larger error than frames close to one another. Secondly, occlusion filtering is performed to remove false loop closure constraints. The depth image provides geometry information which can be used to perform occlusion filtering between two keyframes. The standard deviation of sensor model uncertainty of a depth point provides a bound on the maximum possible depth shift of the following equation:

$$\eta(Z_i) = \frac{q_{\text{pix}}bf}{2}\left[\frac{1}{\text{Rnd}(\frac{q_{\text{pix}}bf}{Z_i}-0.5)} - \frac{1}{\text{Rnd}(\frac{q_{\text{pix}}bf}{Z_i}+0.5)}\right] \qquad \text{equation (2)}$$

All points which violates this assumption are considered as occlusion.

On generation of a new keyframe, the back-end graph is updated with the previous keyframe information and a double window graph structure 200 is created. The pose graph in the back-end is optimized using for example an open source library, g2o. A final optimization on the termination of the visual odometry is performed to generate optimized camera trajectory estimate.

Generally, RGB-D cameras project infra-red patterns and recover depth from correspondences between two image views with a small parallax. During this process, the disparity is quantized into sub-pixels. This introduces a quantization error in the depth measurement. The noise due to quantization error in depth measurement is defined as

$$\eta(Z_i) = \frac{q_{\text{pix}}bf}{2}\left[\frac{1}{\text{Rnd}(\frac{q_{\text{pix}}bf}{Z_i}-0.5)} - \frac{1}{\text{Rnd}(\frac{q_{\text{pix}}bf}{Z_i}+0.5)}\right] \qquad \text{equation (3)}$$

where $q_{pix}$ is the sub-pixel resolution of the device, b is the baseline, and f is the focal length. This error increases quadratically with range $Z_i$, thus preventing the use of depth observations from far objects. The 3D sensor noise of RGB-D cameras can be modeled with a zero-mean multivariate Gaussian distribution whose covariance matrix has the following as the diagonal components:

$$\sigma_{11}^2 = \tan\left(\frac{\beta_x}{2}\right) Z_i, \quad \sigma_{22}^2 = \tan\left(\frac{\beta_y}{2}\right) Z_i, \quad \sigma_{33}^2 = \eta (Z_i)^2 \qquad \text{equation (4)}$$

where the $\sigma_{33}^2$ direction is along the ray, and $\beta_x$ and $\beta_y$ denote the angular resolutions in x and y directions.

FIG. 3 illustrates a RGB-D camera sensor model. The camera is located at the origin and is looking up in the z direction. For each range of 1, 2, and 3 meters, 80 points are sampled and their uncertainties are expressed with ellipsoids. The error in the ray direction increases quadratically.

FIG. 4 is a block diagram of an uncertainty propagation. Each 3D point $\mathbf{p}_i$ in Figure 4 is associated with a Gaussian distribution whose covariance matrices are $\Sigma_i$ and $\Sigma_i'$ ,respectively,

$$p(\mathbf{p}_i) = \mathcal{N}(\bar{\mathbf{p}}_i, \Sigma_i) \qquad \text{equation (5)}$$

where

$$\Sigma_i = R_{\text{ray}} \begin{bmatrix} \sigma_{11}^2 & 0 & 0 \\ 0 & \sigma_{22}^2 & 0 \\ 0 & 0 & \sigma_{33}^2 \end{bmatrix} R_{\text{ray}}^{\mathsf{T}} \qquad \text{equation (6)}$$

$\mathbf{R}_{ray}$ denotes the rotation matrix between the ray and camera coordinates.

A method of linearization is used to propagate the uncertainty to the residuals and the likelihood function can be expressed as a Gaussian distribution,

$$p(\mathbf{r} \mid \xi) = \mathcal{N}(\mu_i, \Sigma_i) \qquad \text{equation (7)}$$

where

$$\mu_i = \begin{bmatrix} \mu_i^I \\ \mu_i^Z \end{bmatrix} = \begin{bmatrix} I_2(\pi(g(\bar{\mathbf{p}}_i, \xi))) - I_1(\mathbf{x}_i) \\ Z_2(\pi(g(\bar{\mathbf{p}}_i, \xi))) - [g(\bar{\mathbf{p}}_i, \xi)]_Z \end{bmatrix} \qquad \text{equation (8)}$$

$$\Sigma_i = \mathbf{J}_i \Sigma_i \mathbf{J}_i^{\mathsf{T}} + \operatorname{diag}\left(0, [\Sigma_i']_{3,3}\right) \qquad \text{equation (9)}$$

$$\mathbf{J}_i^{\mathsf{T}} = \begin{bmatrix} \nabla r_i^I & \nabla r_i^Z \end{bmatrix} = \begin{bmatrix} \frac{\partial r_i^I}{\partial \mathbf{p}_i} & \frac{\partial r_i^Z}{\partial \mathbf{p}_i} \end{bmatrix} \qquad \text{equation (10)}$$

Here, $[\Sigma_i']_{3,3}$ denotes the variance of the back-projected point $\mathbf{q}_i'$ in the z axis of the current camera coordinates as shown in FIG. 4. The maximum likelihood estimation is,

$$\hat{\xi}_{\text{Sensor}} = \underset{\xi}{\operatorname{argmin}} \sum_{i=1}^{n} \mathbf{r}_i^{\mathsf{T}} \Sigma_i^{-1} \mathbf{r}_i \qquad \text{equation (11)}$$

The individual precision matrix is split as two square roots $\Sigma_i^{-1} = \Sigma_i^{-1/2} \Sigma_i^{-1/2}$ and normalize it by applying the single precision matrix of the weighted residuals $\Sigma^{-1}$ as

$$\hat{\xi}_{\text{Sensor}} = \underset{\xi}{\operatorname{argmin}} \sum_{i=1}^{n} \mathbf{r}_i^{\mathsf{T}} \Sigma_i^{-1/2} \Sigma^{-1} \Sigma_i^{-1/2} \mathbf{r}_i \qquad \text{equation (12)}$$

The photometric and geometric errors can be defined as,

$$\mathbf{r}_i = \begin{bmatrix} r_i^I \\ r_i^Z \end{bmatrix} = \begin{bmatrix} I_2\left(\pi\left(g\left(\pi^{-1}(\mathbf{x}_i, Z_i), \xi\right)\right)\right) - I_1(\mathbf{x}_i) \;, \\ Z_2\left(\pi\left(g\left(\pi^{-1}(\mathbf{x}_i, Z_i), \xi\right)\right)\right) - \left[g\left(\pi^{-1}(\mathbf{x}_i, Z_i), \xi\right)\right]_Z \end{bmatrix} \qquad \text{equation (13)}$$

where $Z_i = Z_1(\mathbf{x}_i)$ and $[\cdot]z$ denotes the z component of the vector.

To find the relative camera pose which minimizes the photometric and geometric errors, the energy function is the sum of weighted square errors as

$$\hat{\xi} = \underset{\xi}{\operatorname{argmin}} \sum_{i=1}^{n} \mathbf{r}_i^{\mathsf{T}} \mathbf{W} \mathbf{r}_i \qquad \text{equation (14)}$$

where n is the total number of valid pixels, and $\mathbf{W} \in R^{2\times2}$ denotes the weights for different errors.

Since the energy function is non-linear with respect to the relative camera pose $\xi$, the Gauss-Newton algorithm is usually applied to numerically find the optimal solution and the equation (14) is now updated to:

$$\xi_{k+1} = \xi_k + \Delta\xi, \quad \left(\mathbf{J}^{\mathsf{T}}\left(\mathbf{I}_n \otimes \mathbf{W}\right)\mathbf{J}\right)\Delta\xi = -\mathbf{J}^{\mathsf{T}}\left(\mathbf{I}_n \otimes \mathbf{W}\right)\mathbf{r} \qquad \text{equation (15)}$$

where □ denotes the Kronecker product, $\mathbf{r} = (n, ..., r_n)^{\mathsf{T}} \in R^{2n\mathrm{x}1}$, and the Jacobian matrix is defined as

$$\mathbf{J} = \begin{bmatrix} \mathbf{J}_1 \\ \vdots \\ \mathbf{J}_n \end{bmatrix} \in \mathbb{R}^{2n\times6}, \quad \mathbf{J}_i = \begin{bmatrix} \frac{\partial r_i^I}{\partial \xi_1} & \cdots & \frac{\partial r_i^I}{\partial \xi_6} \\ \frac{\partial r_i^Z}{\partial \xi_1} & \cdots & \frac{\partial r_i^Z}{\partial \xi_6} \end{bmatrix} \in \mathbb{R}^{2\times6} \qquad \text{equation (16)}$$

Eq. (14) is equivalent with maximum likelihood estimation where each residual is independent and follows an identical Gaussian distribution,

$$\hat{\xi}_{\text{ML}} = \underset{\xi}{\operatorname{argmax}} \sum_{i=1}^{n} \log p(\mathbf{r}_i \mid \xi) \qquad \text{equation (17)}$$

where $p(\mathbf{r}_i \mid \xi) = N(\mathbf{0}, \Sigma)$. Note that this corresponds to the case of $\mathbf{W} = \Sigma^{-1}$ in Eq. (14). The Eq. (17) can be rewritten as:

$$\hat{\xi}_{\text{DVO}} = \underset{\xi}{\operatorname{argmin}} \sum_{i=1}^{n} w_i \mathbf{r}_i^{\mathsf{T}} \Sigma^{-1} \mathbf{r}_i \qquad \text{equation (18)}$$

where $w_i = (v + 2)/(v + \mathbf{r}_i^{\mathsf{T}} \Sigma^{-1} \mathbf{r}_i)$. Note that this corresponds to the case of $\mathbf{W} = w_i\Sigma^{-1}$ in Eq. (14).

A T-distribution for photometric errors and propagate a sensor model of a Gaussian distribution for geometric errors by combining Eq (11) AND Eq (18) to now defined as $\sigma$-dense visual odometry ($\sigma$-DVO):

$$\hat{\xi}_{\text{Hybrid}} = \underset{\xi}{\operatorname{argmin}} \sum_{i=1}^{n} \mathbf{r}_i^{\mathsf{T}} \mathbf{W}_i^{1/2} \Sigma^{-1} \mathbf{W}_i^{1/2} \mathbf{r}_i \qquad \text{equation (19)}$$

where the weight matrix $\mathbf{W}_i = \operatorname{diag}(w_i^I, w_i^Z)$ and

$$w_i^I = \frac{\nu + 1}{\nu + \left(\frac{r_i^I}{\sigma}\right)^2} \qquad \text{equation (20)}$$

$$w_i^Z = \frac{1}{\nabla r_i^Z \Sigma_i^{-1} \nabla r_i^{Z\mathsf{T}} + [\Sigma_i']_{3,3}} \qquad \text{equation (21)}$$

The σ-DVO algorithm can be implemented in any suitable client devices such as smart phone, tablet, mobile phone, personal digital assistant (PDA), and any devices. Back to FIG. 1, the SLAM system 100 with integrated σ-DVO algorithm uses smaller number of keyframes and is due to a reduced drift in the system. A reduced number of keyframes indicates less computational requirements in the backend of the system.

FIG. 5 illustrates an example of a map generated by a σ-DVO SLAM system 100. As can be seen, a consistent trajectory is generated using the σ-DVO SLAM system 100.

Embodiments may also be practiced in distributed computing environments where tasks are performed by local and remote processing devices that are linked (either by hardwired links, wireless links, or by a combination thereof) through a communications network.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

## Claims

1. A method for computing visual Simultaneous Localization and Mapping, SLAM, comprising:

   generating, by a visual odometry module (100a), an odometry estimate (112);
   creating, by a keyframe generator (114), keyframes and a keyframe graph (116);
   adding constraints to the keyframe graph (116), using a loop constraint evaluator (118), based on a loop closure, wherein the loop closure is the return to previously visited locations; and
   optimizing, using a graph optimizer (120), the keyframe graph (116) obtained in the previous step, with constraints to produce an optimized map with a trajectory (112);
   **characterized in that**
   the loop closure constraints are weighted based on the inverse square of the metric distance between the keyframes that form the loop closure.

2. The method of claim 1, further comprising:
   generating a new keyframe between a keyframe and a current frame before generating the odometry estimate (112).

3. A visual SLAM system, comprising:

   a visual odometry module (100a) configured to generate an odometry estimate (112);
   a keyframe generator (114) configured to create keyframes and a keyframe graph (116);

a loop constraint evaluator (118) configured to add constraints to the keyframe graph (116) based on a loop closure, wherein the loop closure is the return to previously visited locations; and
a graph optimizer (120) configured to optimize the keyframe graph (116) with constraints to produce an optimized map with a trajectory (112);
**characterized in that**
the loop constraint evaluator (118) is adapted to weight the loop closure constraints based on the inverse square of the metric distance between the keyframes that form the loop closure.

## Patentansprüche

1. Verfahren zum Berechnen von visueller simultaner Positionsbestimmung und Kartierung, SLAM, das Folgendes umfasst:

   Erzeugen, durch ein Visuelle-Odometrie-Modul (100a), einer Odometrieschätzung (112);
   Erstellen, durch einen Schlüsselframeerzeuger (114), von Schlüsselframes und eines Schlüsselframegraphen (116);
   Hinzufügen von Zwangsbedingungen zu dem Schlüsselframegraphen (116), unter Verwendung eines Schleifenzwangsbedingungsevaluators (118), auf der Grundlage eines Schleifenschlusses, wobei der Schleifenschluss das Zurückkehren zu zuvor besuchten Orten ist; und
   Optimieren, unter Verwendung eines Graphenoptimierers (120), des Schlüsselframegraphen (116), der in dem vorigen Schritt erhalten wurde, mit Zwangsbedingungen, um eine optimierte Karte mit einer Trajektorie (112) zu erhalten;
   **dadurch gekennzeichnet, dass**
   die Schleifenschlusszwangsbedingungen auf der Grundlage des inversen Quadrats der metrischen Distanz zwischen den Schlüsselframes, die den Schleifenschluss bilden, gewichtet werden.

2. Verfahren nach Anspruch 1, ferner umfassend:
   Erzeugen eines neuen Schlüsselframes zwischen einem Schlüsselframe und einem aktuellen Frame vor Erzeugen der Odometrieschätzung (112).

3. Visuelle-SLAM-System, das Folgendes umfasst:

   ein Visuelle-Odometrie-Modul (100a), ausgelegt zum Erzeugen einer Odometrieschätzung (112);
   einen Schlüsselframeerzeuger (114), ausgelegt zum Erstellen von Schlüsselframes und eines Schlüsselframegraphen (116);
   einen Schleifenzwangsbedingungsevaluator (118), ausgelegt zum Hinzufügen von Zwangsbedingungen zu dem Schlüsselframegraphen (116), auf der Grundlage eines Schleifenschlusses, wobei der Schleifenschluss das Zurückkehren zu zuvor besuchten Orten ist; und
   einen Graphenoptimierer (120), ausgelegt zum Optimieren des Schlüsselframegraphen (116) mit Zwangsbedingungen, um eine optimierte Karte mit einer Trajektorie (112) zu produzieren;
   **dadurch gekennzeichnet, dass**
   der Schleifenzwangsbedingungsevaluator (118) eingerichtet ist zum Gewichten der Schleifenschlusszwangsbedingungen auf der Grundlage des inversen Quadrats der metrischen Distanz zwischen den Schlüsselframes, die den Schleifenschluss bilden.

## Revendications

1. Procédé permettant de calculer une localisation et un mappage simultanés visuels, SLAM, comprenant :

   la génération, par un module d'odométrie visuel (100a), d'une estimation d'odométrie (112) ;
   la création, par un générateur de trames clés (114), de trames clés et d'un graphe de trames clés (116) ;
   l'ajout de contraintes au graphe de trames clés (116), en utilisant un évaluateur de contraintes en boucle (118), sur la base d'une fermeture de boucle, la fermeture de boucle étant le retour à des localisations précédemment visitées ; et
   l'optimisation, en utilisant un optimiseur graphique (120), du graphe de trames clés (116) obtenu dans l'étape précédente, avec des contraintes pour produire une carte optimisée avec une trajectoire (112) ;

**caractérisé en ce que** les contraintes de fermeture de boucle sont pondérées sur la base d'un carré inverse de la distance métrique entre les trames clés qui forment la fermeture de boucle.

**2.** Procédé selon la revendication 1, comprenant en outre :
la génération d'une nouvelle trame clé entre une trame clé et une trame actuelle avant la génération de l'estimation d'odométrie (112).

**3.** Système SLAM visuel, comprenant :

un module d'odométrie visuel (100a) conçu pour générer une estimation d'odométrie (112) ;
un générateur de trames clés (114) conçu pour créer des trames clés et un graphe de trames clés (116) ;
un évaluateur de contraintes en boucle (118) conçu pour ajouter des contraintes au graphe de trames clés (116) sur la base d'une fermeture de boucle, la fermeture de boucle étant le retour à des localisations précédemment visitées ; et
un optimiseur graphique (120) conçu pour optimiser le graphe de trames clés (116) avec des contraintes pour produire une carte optimisée avec une trajectoire (112) ;
**caractérisé en ce que** l'évaluateur de contraintes en boucle (118) est adapté pour pondérer les contraintes de fermeture de boucle sur la base du carré inverse de la distance métrique entre les trames clés qui forment la fermeture de boucle.

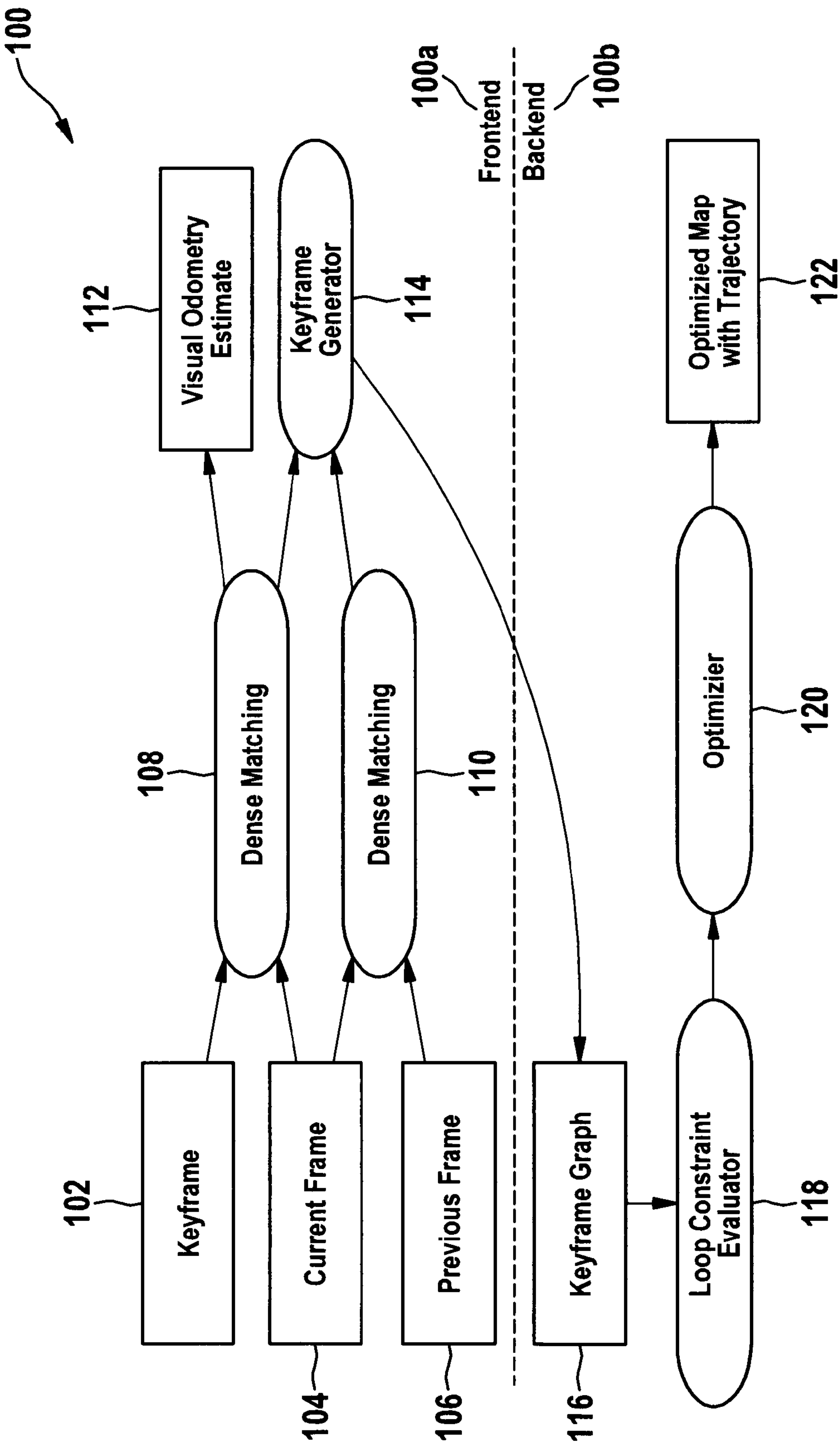
100
100a
Frontend
Backend
100b
Keyframe
102
Current Frame
104
Previous Frame
106
Dense Matching
108
Dense Matching
110
Visual Odometry Estimate
112
Keyframe Generator
114
Keyframe Graph
116
Loop Constraint Evaluator
118
Optimizier
120
Optimizied Map with Trajectory
122

Fig. 1

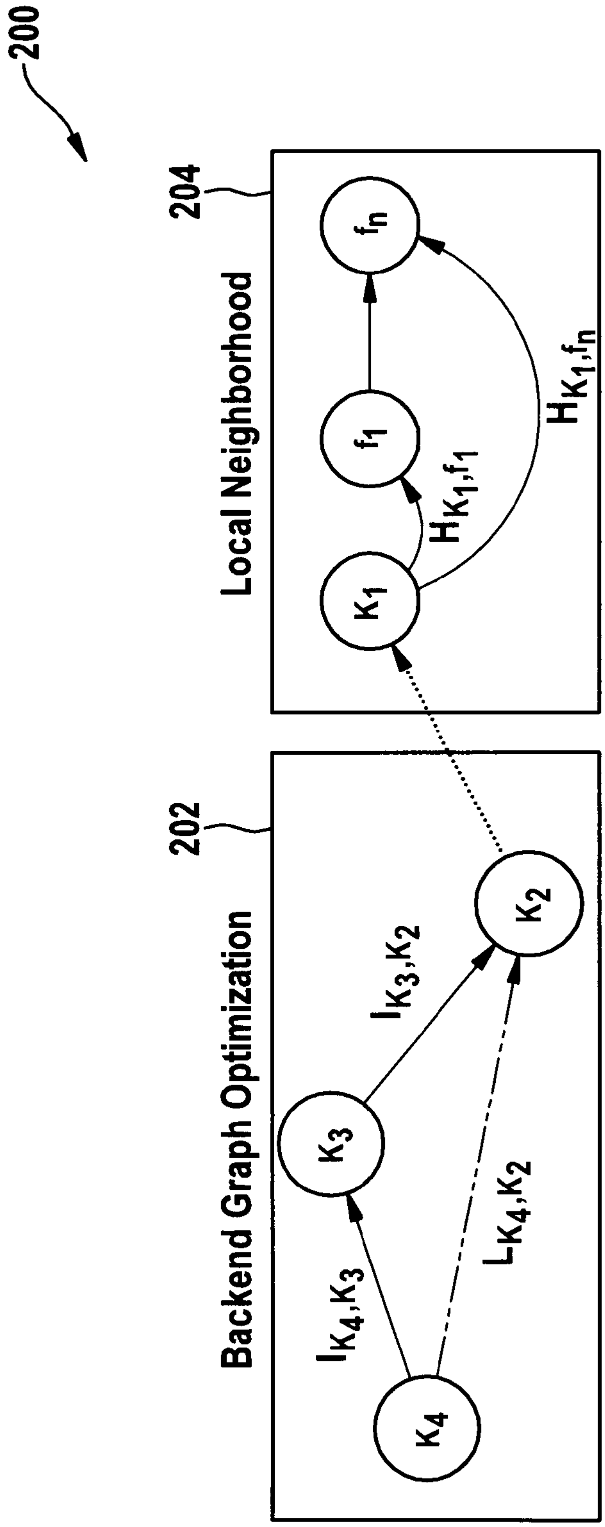
200
202
Backend Graph Optimization
$K_4$
$K_3$
$K_2$
$I_{K_4,K_3}$
$I_{K_3,K_2}$
$L_{K_4,K_2}$
204
Local Neighborhood
$K_1$
$f_1$
$f_n$
$H_{K_1,f_1}$
$H_{K_1,f_n}$

Fig. 2

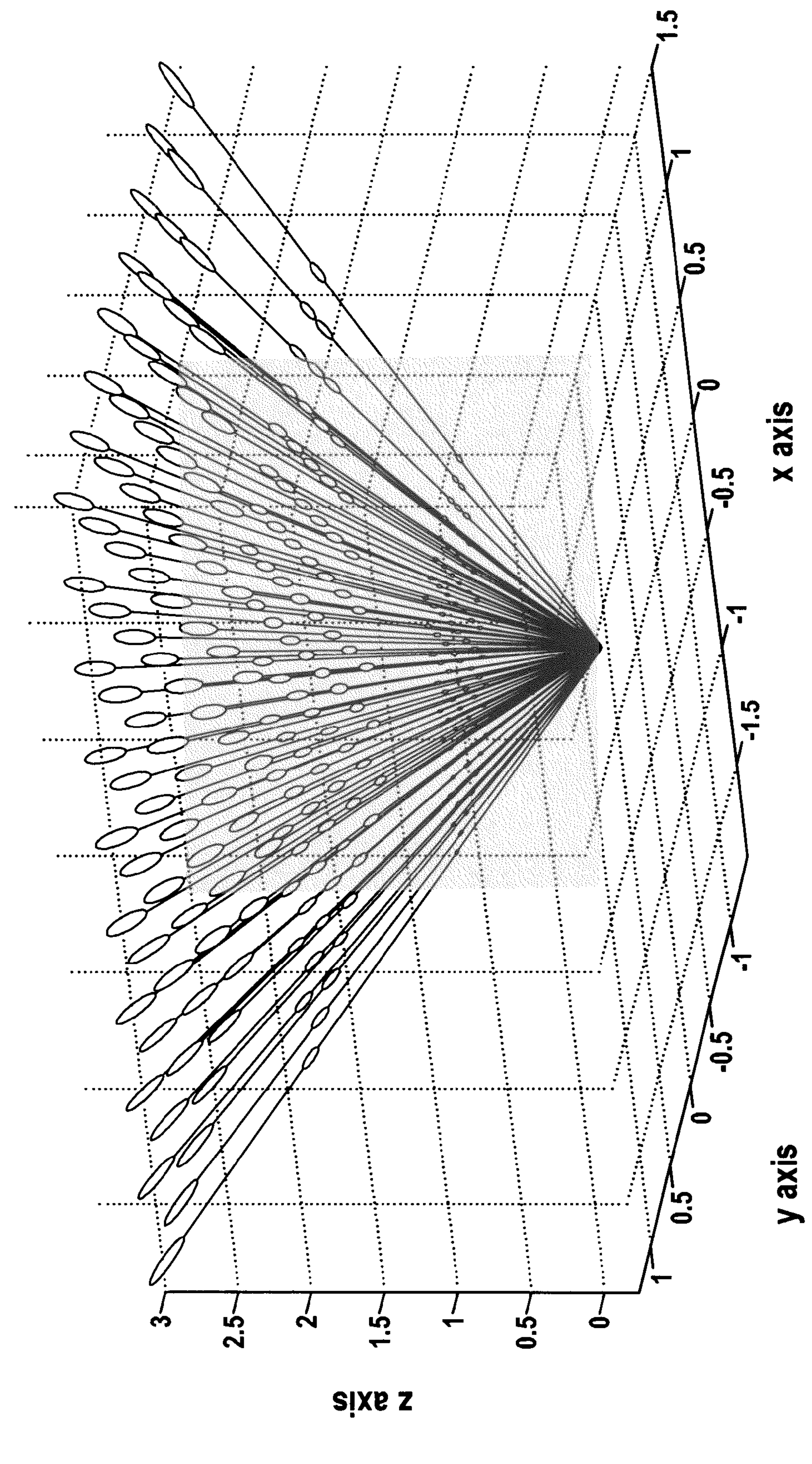


Fig. 3

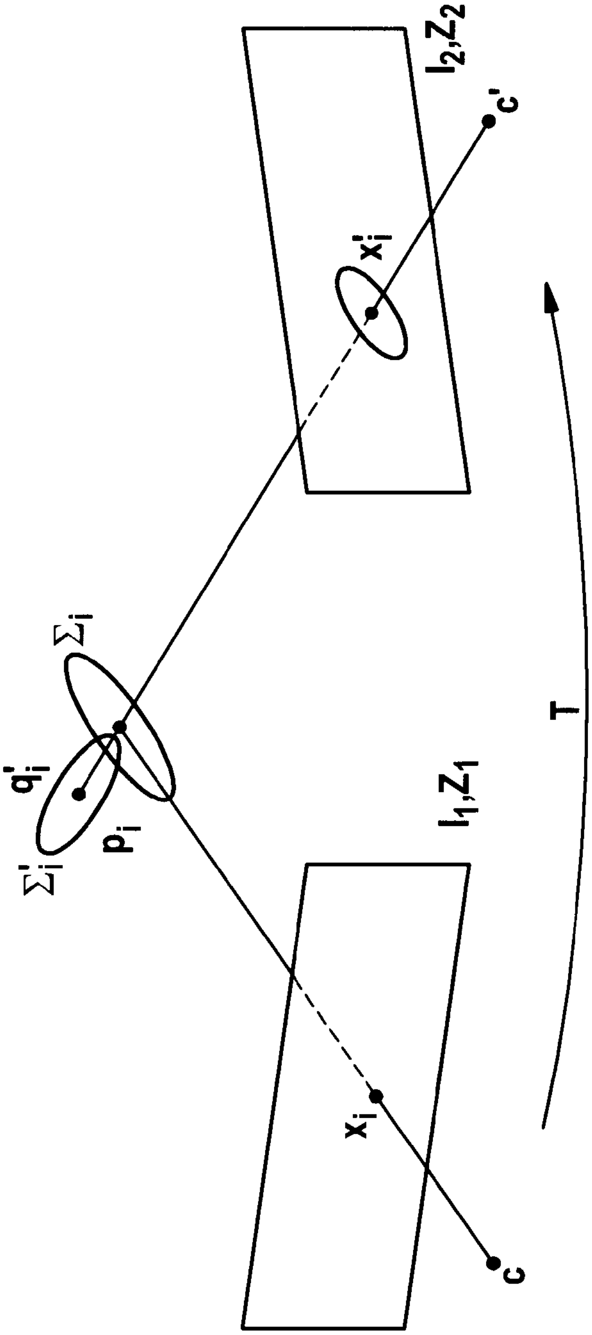


Fig. 4

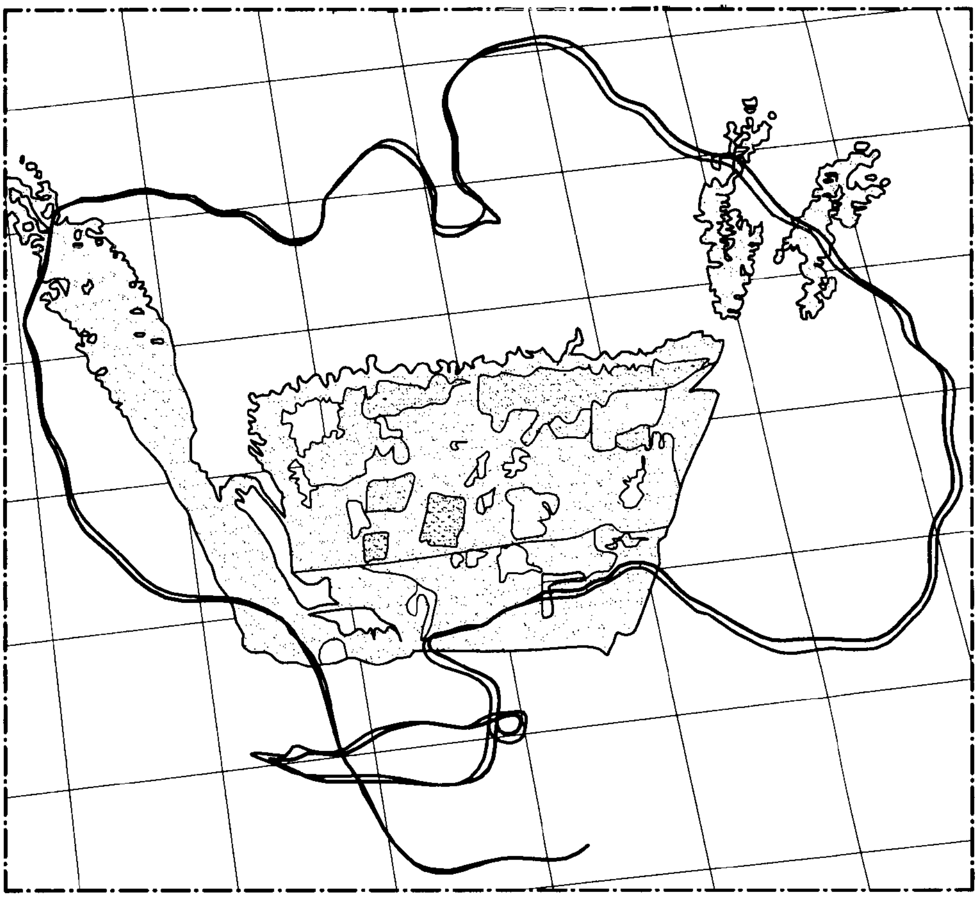

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **CHRISTIAN KERL.** *Dense Visual SLAM for RGB-D Cameras*
- **CHRISTIAN KERL.** *Robust odometry estimation for RGB-D cameras*